(19) Europäisches Patentamt
European Patent Office
Office européen des brevets

(11) Veröffentlichungsnummer: **0 167 003**
**B1**

(12) # EUROPÄISCHE PATENTSCHRIFT

(45) Veröffentlichungstag der Patentschrift: **28.12.88**

(21) Anmeldenummer: **85106957.5**

(22) Anmeldetag: **05.06.85**

(51) Int. Cl.⁴: **E 21 D 9/00**, C 04 B 28/26, C 09 K 17/00, C 08 G 18/38, C 08 G 18/79, C 08 G 18/30 // (C04B28/26, 24:28)

(54) **Verfahren zum Verfestigen und Abdichten von Kohle und/oder Gebirgs-, Erd- oder Ziegelformationen im Bergbau, Tunnelbau und in der Bauindustrie.**

(30) Priorität: **06.06.84 DE 3421085**

(43) Veröffentlichungstag der Anmeldung: **08.01.86 Patentblatt 86/2**

(45) Bekanntmachung des Hinweises auf die Patenterteilung: **28.12.88 Patentblatt 88/52**

(84) Benannte Vertragsstaaten: **AT BE CH DE FR GB IT LI LU NL SE**

(56) Entgegenhaltungen:
**DE-A- 2 460 834**
**DE-A- 2 542 279**
**DE-A- 2 908 746**
**FR-A- 1 564 346**

**Kunststoff-Handbuch, Bd. VII, Polyurethane, Seiten 5,6,79,80**

(73) Patentinhaber: **F. Willich Berg- und Bautechnik GmbH & Co., Bünnerhelfstrasse 6-8, D-4600 Dortmund 70 (DE)**

(72) Erfinder: **Hilterhaus, Karl-Heinz, Rotdornstrasse 34, D-4504 Georgsmarienhütte (DE)**
Erfinder: **Norkus, Hans KVT Kunststoffverfahrenstech. GmbH &, Bünnerhelfstrasse 6-8, D-4600 Dortmund 70 (DE)**

(74) Vertreter: **Vossius & Partner, Siebertstrasse 4 P.O. Box 86 07 67, D-8000 München 86 (DE)**

**EP 0 167 003 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Zum Verfestigen und Abdichten von geologischen und geschütteten Gesteins- und Erdformationen wurden im Untertage-Kohlebergbau in sehr grossem Umfang Polyurethansysteme verwendet, vgl. «Glückauf» (1968), S. 666-670; «Glückauf» (1977), S. 707-711; «Bergbau» (1977), S. 124-129; DE-B-1 758 185 und DE-A-1 784 458.

Polyuretansysteme eignen sich aber nicht in wasserführenden Gebirgsformationen, da Wasser mit Polyisocyanat reagiert und damit das stöchiometrische Verhältnis der Reaktionspartner entscheidend gestört wird. Darüber hinaus bildet sich aus Wasser und Polyisocyanat vorzugsweise Polyharnstoff, der in Spalten und Rissen des Gebirges nicht haftet.

Ein weiterer Nachteil der Verwendung von Polyurethan im Kohlenbergbau ist die leichte Brennbarkeit des ausgehärteten Produkts.

Ein Verfahren zum Verfestigen und Abdichten von geologischen und geschütteten Gesteins- und Erdformationen sowie Kohle, bei dem von der Umsetzung von Polyisocyanaten mit Wassergläsern Gebrauch gemacht wird, ist aus der DE-A-2 908 746 bekannt. Bei diesem bekannten Verfahren werden Wasserglaslösungen und Polyisocyanate innig miteinander vermischt und diese Emulsion in der zu verfestigenden Formation aushärten gelassen.

In dem bekannten Verfahren werden der Mischung bis zu 2 Gewichtsprozent aus der Polyurethanchemie bekannte Beschleuniger, vorzugsweise metallorganische Verbindungen, wie z.B. Dibutylzinndilaurat oder tert.-Amine, wie z.B. Triäthylamin, zugesetzt. Ferner werden auch bekannte Treibmittel, wie z.B. Aceton, Methylenchlorid, Monofluortrichlormethan, Dichlordifluormethan und Butan in Mengen bis zu 30 Gewichtsprozent, bezogen auf Polyisocyanat/Wasserglaslösungs-Gemisch eingesetzt. Schliesslich werden der Mischung Verbindungen mit mindestens einer gegenüber Polyisocyanaten reaktionsfähigen Gruppe, vorzugsweise Polyole, in einer Menge bis zu 30 Gewichtsprozent, bezogen auf die Wasserglaslösung, zugesetzt.

Das aus der DE-A-2 908 746 bekannte Verfahren führt jedoch wegen der unzureichenden physikalischen Eigenschaften und mechanischen Festigkeit der entstehenden Organomineralprodukte nicht zu einer befriedigenden Verfestigung der Kohle bzw. Gebirgsformation. Bekannte nicht expandierte Reaktionsprodukte aus Polyisocyanat und Wasserglas erreichen nur eine unzureichende Biegezugfestigkeit nach 2 Stunden bei 50°C. Auch nach 8 Tagen erreichen sie nicht die Werte der Biegezugfestigkeit entsprechender rein organischer Produkte (Polyurethane), die ihr Härtemaximum nach etwa 4 Stunden erreichen, dann aber nicht mehr härter werden. Kürzere Abbindungszeiten sind bei Polyuretansystemen zwar möglich, im Hinblick auf die exotherme Reaktion jedoch kritisch, da sie zur Selbstentzündung eines Kohleflözes führen können.

Bei näherer Betrachtung von Reaktionssystemen, bestehend aus Wasserglaslösungen und NCO-gruppenhaltigen Präparationen erkennt man die Schwierigkeiten der Rezepturgestaltung. Einerseits muss der komplizierte chemische Reaktionsablauf verarbeitungstechnisch beherrschbar gemacht werden, andererseits muss das Endprodukt ganz bestimmten Anforderungen entsprechen. Die oft diametral auseinanderstrebenden Anforderungen sind nur unzulänglich auf einen Nenner zu bringen. Sie schränken bisher den Einsatz preisgünstiger Wasserglaslösungen in Organo/Anorgano-Systemen erheblich ein.

In Reaktionssystemen, die ein Polyisocyanat und eine wässrige Wasserglaslösung enthalten, kann ein stöchiometrisches NCO/OH-Verhältnis nicht erreicht werden, so dass die Reaktion unkontrollierbar fortschreitet. Es kann nicht erwartet werden, dass das Polyisocyanat in irgendeiner Weise zu einem tragenden organischen Polymergerüst aufgebaut wird. Die Reaktion von Polyisocyanat in Wasserglaslösungen ist deshalb nur insofern von technischem Interesse, als durch die Reaktion von R-NCO und Wasser gasförmiges $CO_2$ freigesetzt wird, das als Härter und Koagulant für das Wasserglas angesehen werden kann. Das aus dem Polyisocyanat entstehende niedermolekulare Harnstoffprodukt bleibt als harter Füllstoff im mineralischen Gefüge des Wasserglases feinstkörnig verteilt liegen.

Ein weiteres Problem ergibt sich aus dem Überschuss an gasförmigem $CO_2$ bei praktischer Rezepturgestaltung. So wird schon in der DE-A-1 770 384 auf die Notwendigkeit, das stöchiometrische Verhältnis der Reaktanten möglichst einzuhalten, hingewiesen. Ein Weg, wie dies zu erreichen sei, wird jedoch nicht aufgezeigt.

Bei stöchiometrischem Verhältnis ist ausserdem lediglich an das Verhältnis R-NCO/OH gedacht worden. An die Bedeutung eines — wie auch immer definierten — Reaktionsverhältnisses $Me_2O/SiO_2/CO_2$ ist nicht gedacht worden. Weitergehend wird ausserdem darauf hingewiesen, dass bei höherem Polyisocyanatanteil die Reaktion sehr schnell wird und dabei auch zum Aufschäumen neigt. Diese Fakten schränken die Verwertung der nach obiger Schrift erhältlichen Produkte in erheblichem Umfang ein.

Aus dem Formenbau, bei dem Formen aus Sand und Natriumwasserglas hergestellt werden, ist bekannt, dass ein Überschuss an gasförmigem $CO_2$ zur Härtung des Wasseglases die Stabilität der Formmasse negativ beeinflusst. Dies ist ein Effekt, wie er sich durch hohen Überschuss von Polyisocyanat in einer Reaktionsmischung mit Wasserglas ergibt.

In der DE-A-2 460 834 wird dem Reaktionsgemisch Wasserglaslösung/Polyisocyanat ein Katalysator zugesetzt, der in an sich bekannter Weise Polyisocyanat trimerisieren kann. Das dort beschriebene Verfahren dient jedoch ausschliesslich zur Herstellung von Organomineralschäumen.

Im Hinblick auf die Katalysatormenge findet sich in der DE-A-2 460 834 keine gezielte Lehre; in den Beispielen werden bei Verwendung von 2,4,6-Tris-(dimethylaminomethyl)-phenol als Katalysator und Polyphenolpolymethylenpolyisocyanat mit einem NCO-Gruppengehalt von etwa 28% etwa 18 bis 36 mMol dieser Verbindung pro Mol NCO-Gruppen eingesetzt. Bei anderen Katalysatoren bzw. Polyisocyanaten ist das Verhältnis noch erheblich grösser.

Der Erfindung liegt die Aufgabe zugrunde, ein Verfahren zum Verfestigen und Abdichten von Kohle und/oder Gebirgs-, Erd- oder Ziegelformationen, z.B.

im Bergbau, Tunnelbau und in der Bauindustrie, durch Umsetzung von Polyisocyanaten und wässrigen Alkalisilikatlösungen in der zu verfestigenden Kohle oder Gebirgs-, Erd- oder Ziegelformation zu schaffen, das unter den herrschenden Bedingungen in möglichst kurzer Zeit zu einer befriedigenden Verfestigung der betreffenden Formation führt.

Diese Aufgabe wird durch den überraschenden Befund gelöst, dass man durch den Einsatz einer definierten Menge von bestimmten Katalysatoren, bezogen auf die Menge der vorhandenen NCO-Gruppen, zu einem Organomineralprodukt gelangen kann, in dem ein organisches Gerüst und ein anorganisches Gerüst dreidimensional ineinander verwoben sind und zwar so, dass bei der Reaktion keine Volumenexpansion stattfindet und deshalb das Endprodukt als dichtes hochfestes «interpermeated» oder «interpenetrated network» vorliegt, das die Kohle oder die Gebirgs-, Erd- oder Ziegelformation in hervorragender Weise verfestigt.

Bei Zusatz einer definierten Menge eines Polyisocyanat-Trimerisierungskatalysators zu dem Reaktionsgemisch aus Polyisocyanat und Wasserglaslösung wird einerseits diejenige Menge an gasförmigem $CO_2$ entwickelt, die für die optimale Härtung des anorganischen Teils des Gemisches benötigt wird, während andererseits auch in ausreichendem Mass Trimerisierung des Polyisocyanats erreicht wird, um ein organisches Gerüst aufzubauen. Damit entsteht ein ineinander verwobener anorganischer und organischer dreidimensionaler Körper, der hervorragende mechanische Festigkeit aufweist.

Gegenstand der Erfindung ist somit ein Verfahren zum Verfestigen und Abdichten von Kohle und/oder Gebirgs-, Erd- und Ziegelformationen durch Umsetzung von Polyisocyanaten und wässrigen Alkalisilikatlösungen in der zu verfestigenden Kohle oder Gebirgs-, Erd- oder Ziegelformation, das dadurch gekennzeichnet ist, dass man die Umsetzung in Gegenwart eines die Trimerisierung des Polyisocyanates aktivierenden Katalysators durchführt und den Katalysator unter Berücksichtigung von Zusammensetzung und Menge — relativ zur Polyisocyanatmenge — der wässrigen Alkalisilikatlösung in derartiger Menge pro Mol NCO-Gruppen im Reaktionsgemisch einsetzt, dass bei der Umsetzung ineinander verwobene Netzwerke aus anorganischem und organischem Polymerisat entstehen.

Es wurde gefungen, dass in überraschender Weise Polyisocyanate in wässriger, alkalischer $SiO_2$-haltiger Lösung zum wesentlichen Teil zur Trimerisierung angeregt werden können. Dabei wird die NCO/Wasserreaktion weitgehend unterdrückt, so dass eine durch die Rezepturgestaltung steuerbare Menge an gasförmigem $CO_2$ entsteht, welches optimal zur Reaktion mit dem Wasserglas verwendet wird. Während der Reaktion bauen sich gleichzeitig zwei ineinander verwobene Polymergerüste auf.

Im ersten Reaktionsschritt reagiert ein Teil des Polyisocyanates mit dem Wasser zu Polyharnstoff unter Abspaltung von gasförmigem $CO_2$. Das in situ entstandene $CO_2$ reagiert augenblicklich mit dem $Ne_2O$-Anteil der Wasserglaslösung zu $Me_2CO_3 \cdot xH_2O$ (Me ist ein Alkalimetall, insbesondere Natrium oder Kalium). Durch Bindung von $Me_2O$ aus der Wasserglaslösung wird der $SiO_2$-Anteil zur Polykieselsäurebildung angeregt. Bei der Reaktion werden erhebliche Wärmemengen frei, so dass in der nächstfolgenden Stufe ein bestimmter weiterer Teil des Polyisocyanates die Trimerisierungsreaktion eingehen kann. Ersttrimerisierte Produkte erfahren ihrerseits mindestens teilweise eine weitere Trimerisierung, so dass sich ein verzweigtes hochmolekulares Polymergerüst aufbauen kann.

In der beiliegend Zeichnung zeigt Fig. 1 die Beziehung zwischen dem Molverhältnis Katalysator/NCO-Gruppen im Reaktionsgemisch und der Biegezugfestigkeit der Produkte, und Fig. 2 die Beziehung zwischen dem Molverhältnis NCO/$SiO_2$ im Reaktionsgemisch und der Biegezugfestigkeit der Produkte.

Im Verfahren der Erfindung wird bereits nach kurzer Zeit eine hervorragende Klebewirkung zwischen Umsetzungsproldukt von Polyisocyanat und Wasserglas einerseits und der Kohle, Gebirgs- oder Erdformation andererseits erreicht. Die Biegezugfestigkeit der verfestigten Formation erreicht bereits nach etwa 2 Stunden Werte, die bei üblichen Polyurethanverfahren erst nach etwa 4 Stunden erreichbar sind. Dabei stellt es einen besonderen Vorteil des erfindungsgemäss verwendeten Systems dar, dass sich die Härte der verfestigten Formation im Laufe der Zeit stetig weiter erhöht. So wurde beispielsweise nach 90 Stunden ein Wert von etwa 10 $N/mm^2$ für die Biegezugfestigkeit gemessen.

Überraschenderweise lässt sich das Verfahren der Erfindung auch in feuchten oder wasserhaltigen Formationen durchführen, ohne dass die Aushärtung durch das Umgebungswasser ungünstig beeinflusst wird. Sogar unter Wasser oder beispielsweise im Schwemmsand ist nach dem Verfahren der Erfindung ein hartes Produkt mit der zu verfestigenden Formation erhältlich, das keinerlei Entmischungstendenzen zeigt.

Das Verfahren der Erfindung eignet sich deshalb insbesondere zur Anwendung im Bergbau zur Verfestigung von Kohle und Gestein, zur Anwendung im Tunnelbau zur Verfestigung von Gestein und Erde, sowie allgemein in der Bauindustrie zur Verfestigung und Konsolidierung von Gestein und Ziegel, z.B. bei der Altbausanierung.

Das Umsetzungsprodukt des Verfahrens der Erfindung ist wegen seines hohen Anteils an organischen Stoffen im Vergleich zu organischen Verfestigungsmitteln vermindert brennbar. Beim Schweltest im Quarzrohr entwickelt es weniger toxische Dämpfe. Das Material zeigt auch ausreichenden elektrischen Widerstand, so dass eine elektrostatische Aufladung nicht stattfindet. Eine Herabsetzung der Selbstentzündungstemperatur wird beim Vermischen von staubförmigem Umsetzungsprodukt mit Kohlestaub nicht bewirkt.

Das im Verfahren der Erfindung eingesetzte System weist überdies Vorteile im Hinblick auf die Gebrauchshygiene auf: die als Katalysator eingesetzten Stoffe verbleiben in Suspension und ergeben im Vergleich zu den bisher häufig benutzten Aminen, wie Triäthylendiamin und Organometallverbindungen, wie Dibutylzinndilaurat, praktisch keine Geruchsbelästigung und Gesundheitsgefährdung.

Die notwendigen Bestandteile des Reaktionsgemisches, das im Verfahren der Erfindung verwendet wird, sind eine Wasserglaslösung, ein Polyisocyanat und ein Katalysator, der sich zur Trimerisierung von Polyisocyanaten eignet. Zur Erzielung von befriedigenden Verfestigungen muss das Molverhältnis Katalysator/NCO-Gruppen in genau definierten Grenzen festgelegt werden.

Im Verfahren der Erfindung können die auf dem Fachgebiet üblicherweise benutzten wässrigen Alkalisilikatlösungen eingesetzt werden, beispielsweise die in der EP-B-0 000 579 und in der DE-A-2 460 834 beschriebenen Wasserglaslösungen. Wegen ihrer leichten Zugänglichkeit und geringen Viskosität sind Natriumwassergläser bevorzugt.

Bevorzugt eingesetzt werden Natriumwassergläser mit verhältnismässig hohem Feststoffgehalt, der günstigerweise im Bereich von etwa 40 bis 60, insbesondere etwa 46 bis 52 Gewichtsprozent anorganische Feststoffe liegt. Theoretisch sind auch höherkonzentrierte Wasserglaslösungen verwendbar und im Sinne der Erfindung einsetzbar. Wegen der allzuhohen Viskosität und der daraus sich ergebenden Verarbeitungsschwierigkeiten haben solche Wasserglaslösungen jedoch keine praktische Bedeutung.

Das Molverhältnis von $SiO_2$ zu $Me_2O$ in der eingesetzten Wasserglaslösung ist vorzugsweise verhältnismässig hoch und liegt günstigerweise im Bereich von etwa 2,09 bis 3,44. Besonders bevorzugt ist ein Bereich von etwa 2,48 bis 3,17, insbesondere 2,70 bis 2,95.

Durch einen $Me_2O$-Gehalt innerhalb des vorstehend angegebenen Bereiches wird der Aufbau des dreidimensionalen anorganischen Kieselsäuregerüstes begünstigt.

In einem Bereich, bei dem der $Me_2O$-Anteil kleiner als angegeben ist, liegt ein hochviskoses und deshalb verarbeitungstechnisch schwieriges Wasserglas vor. Es genügen schon kleinste Mengen an Reaktions-$CO_2$ um das Wasserglas zum Ausfällen zu bringen. Vermischungsinhomogenitäten führen dabei zu Produkten mit unzureichenden Eigenschaften.

In einem Bereich, bei dem das $Me_2O$-Verhältnis den angegebenen Bereich wesentlich überschreitet, wird zur vollständigen Aushärtung des Wasserglasanteils in einer Rezeptur ein hoher Anteil von Reaktions-$CO_2$ benötigt. Dieser ist aber nur durch Verminderung der Menge des Trimerisierungsproduktes erhältlich. Damit wird das Verhältnis Harnstoffprodukt/Trimerisierungsprodukt zur Harnstoffseite hin verschoben, wobei im Endprodukt der darin verstärkende Trimerisierungsproduktanteil vermindert ist. Dies führt ebenfalls zu unzureichenden Verfestigungen.

Zusammensetzung und Menge des verwendeten Wasserglases müssen bei der Festlegung der Katalysatormenge berücksichtigt werden, um optimale Festigkeit des Produktes zu erzielen. Hervorragende Verfestigungsergebnisse werden im Verfahren der Erfindung insbesondere dann erhalten, wenn das Polyisocyanat und die Wasserglaslösung in einem Molverhältnis $NCO/SiO_2$ von 0,8 bis 1,4, vorzugsweise von 0,85 bis 1,15, eingesetzt werden. Besonders bevorzugt ist ein Molverhältnis $NCO/SiO_2$ von etwa 1,0.

Wie bereits erwähnt, wird die Verwendung konzentrierter Wasserglaslösungen bevorzugt, um einen zu grossen Wassergehalt der Produkte zu vermeiden, der ihre Festigkeitseigenschaften nachhaltig negativ beeinflussen würde. Bei zu starker Verdünnung des Reaktionsgemisches kann ausserdem die freigesetzte Wärmemenge für die Einleitung der Trimerisierungsreaktion unzureichend sein. Die Untergrenze des Wasserglasanteils ist durch die Tatsache vorgegeben, dass seine Menge zum Aufbau des anorganischen Gerüstes ausreichen muss. Dazu sind mindestens etwa 0,2, vorzugsweise mindestens etwa 0,5 Gewichtsteile Wasserglas pro Gewichtsteil Polyisocyanat erforderlich. Die Obergrenze des zulässigen Wasserglasanteils ist bei gegebener Wasserglaszusammensetzung dann erreicht, wenn die freigesetzte Menge $CO_2$ nicht mehr ausreicht, den $Me_2O$-Anteil des Wasserglases zu binden. Genauso wie bei zu hohem Wassergehalt ist dann eine vollständige Aushärtung nicht mehr möglich. Bei Verwendung von Natronwasserglas 48/50 mit einem Molverhältnis $SiO/Me_2O$ von etwa 2,85 liegt die Obergrenze des Wasserglasgehaltes beispielsweise bei etwa 1,6 bis 1,7 Gewichtsteile Wasserglas pro Gewichtsteil Polyisocyanat. Die angegebenen Grenzwerte können sich bei Wassergläsern mit anderer Zusammensetzung etwas verschieben.

Im Verfahren der Erfindung können die üblicherweise auf dem Fachgebiet eingesetzten Polyisocyanate verwendet werden, beispielsweise die in der EP-B-0 000 579 und in der DE-A-2 460 834 genannten Verbindungen. Geeignet sind ferner auch NCO-Voraddukte, wie sie von der Herstellung von Polyurethanen bekannt und in der DE-A-2 460 834 beschrieben sind.

Bevorzugt werden im Verfahren der Erfindung Polyisocyanate, die leicht eine Trimerisierungsreaktion zum Aufbau eines dreidimensionalen organischen Gerüstes eingehen können. Dies sind Verbindungen, die möglichst keine sterische Hinderung der an der Umsetzung beteiligten NCO-Gruppen aufweisen. Ein spezielles Beispiel für ein solches, sterisch nicht gehindertes Polyisocyanat ist 4,4'-Diphenylmethandiisocyanat (auch in Form des Phosgenierungsproduktes von Anilin-Formaldehyd-Kondensaten (rohes MDI)) oder ein Präpolymerisat davon. Als Präpolymerisat eignet sich ein Umsetzungsprodukt von rohem MDI mit glykolgestartetem Polysiloxan mit einer OH-Zahl von 40 bis 200.

Die erfindungsgemäss eingesetzten Polyisocyanate haben vorzugsweise einen Gehalt an NCO-Gruppen von etwa 10 bis 55 Gewichtsprozent, bezogen auf die Masse des Polyisocyanats. Besonders bevorzugt sind Polyisocyanate mit einem NCO-Gruppen-Gehalt von etwa 24 bis 36, insbesondere 28 bis 32 Gewichtsprozent. Ein geringerer Anteil an NCO-Gruppen im Polyisocyanat erschwert den Aufbau eines dreidimensionalen organischen Gerüstes. Andererseits wird bei einem höheren NCO-Gehalt leicht zu viel gasförmiges $CO_2$ freigesetzt, was zu einer Überhärtung des anorganischen Teils des Produktes führen kann.

Die dritte, im Verfahren der Erfindung notwendige Komponente ist ein Katalysator, der die Trimerisierung der Polyisocyanatkomponente zu katalysieren vermag. Geeignet sind die aus der Polyurethan-Chemie bekannten Trimerisierungskatalysatoren, die

vorzugsweise tertiäre Amine und Aminoalkohole sind. Spezielle Beispiele für geeignete Trimerisierungskatalysatoren sind 2,4,6-Tris-(dimethylaminomethyl)-phenol, sowie andere Mannichbasenprodukte mit dem Strukturelement

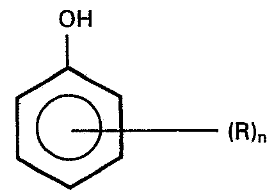

in dem R einen Rest der Formel $-CH_2-N\begin{matrix} R_1 \\ R_2 \end{matrix}$ bedeutet; n einen Wert von 1 bis 3 hat und die Reste R sich in o- oder p-Stellung befinden. Die Reste $R_1$ und $R_2$ sind gleich oder verschieden und bedeuten $C_{1-4}$-Alkylreste, vorzugsweise Methylgruppen, oder $C_{1-4}$-Hydroxyalkylreste, vorzugsweise Hydroxymethylgruppen.

Selbstverständlich können auch Gemische der vorstehend genannten Katalysatoren eingesetzt werden.

Das Molverhältnis von Katalysator zu NCO-Gruppen im Reaktionsgemisch ist im Verfahren der Erfindung kritisch, da nur in einem verhältnismässig engen Bereich ausgezeichnete Verfestigungsergebnisse erhalten werden können. Es bestimmt sich unter Berücksichtigung von Zusammensetzung und Menge des eingesetzten Wasserglases nach folgenden Gesichtspunkten:

a) Die Katalysatormenge muss ausreichen, um die für den Aufbau des organischen Gerüstes erforderliche Trimerisierungsreaktion zu katalysieren.

b) Die Katalysatormenge darf nicht so gross sein, dass eine unkontrollierte, stark exotherme Reaktion abläuft, da diese wegen zu starker $CO_2$-Entwicklung und auch Verdampfung von Wasser zu einem Aufschäumen des Reaktionsgemisches und zu Produkten mit unzugänglicher Festigkeit führen würde.

Bei der üblichen und erfindungsgemäss bevorzugten Zusammensetzung und Menge des Wasserglaslösung beträgt das Verhältnis 6,0 bis 14,5, vorzugsweise 8,5 bis 13,8 und insbesondere 10,2 bis 13,3 mMol Katalysator pro Mol NCO-Gruppen im Reaktionsgemisch.

Bei einer geringeren Katalysatormenge als dem angegebenen Bereich findet kein ausreichender Aufbau eines dreidimensionalen polymeren Gerüstes mehr statt. Andererseits führt eine zu grosse Katalysatormenge zu einer ungenügenden Härtung des anorganischen Teils und als Folge der stark exothermen Reaktion auch zu einer gewissen Expansion des Produktes.

Zur weiteren Kontrolle der Trimerisierungsreaktion kann ein Cokatalysator mit eingesetzt werden. Dieser kann z.B. aus einer dreiwertigen Eisenverbindung, wie $FeCl_3$, bestehen, wie sie in den verschiedenen technischen Polyisocyanaten häufig herstellungsbedingt anzutreffen sind. Selbstverständlich sind auch die anderen an sich bekannten Cokatalysatoren einsetzbar, z.B. Trialkylphosphane wie Trimethylphospholin, Alkalimetallsalze von Carbonsäuren, wie Natriumacetat oder Natriummaleat, oder Übergangsmetallverbindungen, wie $Sb_2O_3$, $ZrOCl_2$, $SbCl_5$ oder CuCl.

Verfestigungen mit besonders günstigen physikalischen Eigenschaften werden im Verfahren der Erfindung dann erhalten, wenn Polyisocyanat und Wasserglas in derartiger Menge und Zusammensetzung eingesetzt werden, dass sich das erläuterte bevorzugte Verhältnis von Katalysatormenge zu NCO-Gruppen zusammen mit dem ebenfalls erläuterten bevorzugten Verhältnis $NCO/SiO_2$ einstellt und ausserdem der Katalysator in derartiger Menge vorliegt, dass die entwickelte $CO_2$-Menge gerade zur vollständigen Ausfällung des $Me_2O$-Anteils des Wasserglases ausreicht. Diese Bedingungen sind erfüllt, wenn Gemische zur Anwendung kommen, in denen der Katalysator in einer Menge von 6,0 bis 14,5, vorzugsweise 8,5 bis 13,8, insbesondere 10,2 bis 13,3 mMol pro Mol NCO-Gruppen vorliegt, das Polyisocyanat und die Alkalisilikatlösung in einem Molverhältnis $NCO/SiO_2$ von 0,8 bis 1,4, vorzugsweise 0,85 bis 1,15 verwendet werden. Das Wasserglas soll die übliche bevorzugte Zusammensetzung, d.h. einem Molverhältnis $SiO_2/Me_2O$ von 2,09 bis 3,44, vorzugsweise 2,48 bis 3,17, aufweisen.

Um eine zufriedenstellende Verfestigung der Kohle oder Gebirgs-, Erd- oder Ziegelformation zu erzielen, ist bei der Umsetzung von Polyisocyanat und Wasserglaslösung die gleichmässige Verteilung des Katalysators im Reaktionsgemisch wünschenswert. Der Katalysator wird üblicherweise der Wasserglaslösung zugesetzt, wobei jedoch in der bekannten Praxis keine beständige Dispersion erreicht werden konnte, da sich das Gemisch beim Stehen enthomogenisiert.

Es wurde nun festgestellt, dass die Tendenz zur Enthomogenisierung verringert oder verhindert werden kann, wenn dem katalysatorhaltigen Gemisch Antimontrioxid zugesetzt wird. Dadurch kann der Katalysator in dispergierter Form gehalten werden. Dieser Befund ist unabhängig von der Menge des zugesetzten Katalysators, d.h. die vorteilhafte Wirkung des Zusatzes von Antimontrioxid tritt nicht nur bei der Lehre der vorliegenden Erfindung auf, sondern allgemein bei Verfahren zur Herstellung von Organomineralprodukten aus Polyisocyanaten und Wasserglaslösungen bei Verwendung von Trimerisierungskatalysatoren. Das Antimontrioxid wird in einer Menge von etwa 5 bis 100, vorzugsweise 20 bis 50, insbesondere 30 bis 40 Gewichtsprozent, bezogen auf die Katalysatormenge eingesetzt.

Im Verfahren der Erfindung ist der Zusatz eines Treibmittels zum Reaktionsgemisch grundsätzlich nicht erforderlich. Je nach der genauen Rezepturgestaltung und den übrigen Bedingungen der Reaktion kann jedoch dem Gemisch eine genau dosierte, geringe Menge an Treibmittel zugesetzt werden, die jedoch nicht ausreichend ist, um eine Expandierung des Produktes bei der Polymerisation zu bewirken.

Dazu eignen sich flüchtige Substanzen, die bei Raumtemperatur flüssig sind und während der Umsetzung des Wasserglases mit dem Polyisocyanat infolge der dabei freiwerdenden Wärme verdampfen. Beispiele für geeignete flüchtige Substanzen sind

Monofluortrichlormethan, Dichlordifluormethan und Trichlortrifluoräthan.

Die zugesetzte Menge an flüchtiger Substanz beträgt vorzugsweise höchstens 3,5 Gewichtsprozent, bezogen auf die Gesamtmasse des Reaktionsgemisches. Besonders bevorzugt ist ein Gehalt des Reaktionsgemisches an flüchtiger Substanz von 1 bis 2,8 Gewichtsprozent. Ein derart geringer Zusatz bewirkt keine Expandierung (Aufschäumen) des Produktes während der Umsetzung. Vielmehr entweicht die flüchtige Substanz praktisch vollständig in der Anfangsphase der Umsetzung aus dem Reaktionsgemisch und hinterlässt dabei einzelne Hohlräume und Kanäle, die die im Reaktionsgemisch verbleibende Alkalicarbonatlösung aufnehmen können. Dieser Mechanismus trägt zu dem ausserordentlichen Verfestigungsergebnis der Erfindung bei. Ein nennenswertes Aufschäumen des Umsetzungsproduktes wird im Verfahren der Erfindung bewusst vermieden, da nur kompakte Verfestigungsprodukte die gegebenenfalls herrschenden Gebirgsdrücke auffangen können. Die Produkte bleiben aber noch so weit elastisch, dass sie die üblichen Gebirgsbewegungen im mm-Bereich mitmachen können.

Dem Reaktionsgemisch können ferner keimbildende und stabilisierende Stoffe zugesetzt werden. Geeignete keimbildende Stoffe sind beispielsweise feinzerteilte Feststoffe, wie Siliciumdioxid oder Aluminiumoxid, gegebenenfalls zusammen mit Zinkstearat, oder amorphe Kieselsäuren oder Metallsilikate. Davon wird als Keimbildner das aus der kolloidalen Wasserglaslösung ausfallende Siliciumdioxid bevorzugt.

Geeignete Stabilisatoren sind Silikonöle auf der Basis von Polysiloxanen. Sie können in einer Menge von etwa 0,5 bis 2, insbesondere 0,8 bis 1,4 Gewichtsprozent, bezogen auf die Gesamtmasse des Reaktionsgemisches, zugesetzt werden.

Je nach den gewünschten Eigenschaften der Verfestigung und den herrschenden Bedingungen können dem Reaktionsgemisch noch weitere Zusätze einverleibt werden. Hierzu gehören beispielsweise organische Verbindungen, die gegenüber Isocyanatgruppen reaktionsfähige Reste aufweisen. Beispiele dafür sind Polyole, wie Polyester- und Polyätherpolyole, sowie Phosphonatester, z.B. Tri-β-chloräthyl- oder -isopropyl-phosphonat, die in der Polyurethan-Chemie bekannt sind. Die Polyole sollen in ihrer Menge derart begrenzt sein, dass ihr Zusatz den Aufbau eines dreidimensionalen organischen und eines damit verwobenen anorganischen Gerüstes nicht stört. Zweckmässigerweise wird der Zusatz an Polyol oder Phosphonatester deshalb auf höchstens 2 bis 45, vorzugsweise 10 bis 20 Gewichtsprozent, bezogen auf die Isocyanatkomponente, begrenzt.

Zur Verminderung der Entflammbarkeit können dem Reaktionsgemisch flammhemmende Stoffe zugesetzt werden. Hierfür eignen sich die in der Kunststoffchemie bekannten flammhemmenden oder flammverzögernden Stoffe, wie Phosphate und Borate. Die Menge an flammhemmenden Stoffen kann im Bereich von 2 bis 30 Gewichtsprozent, bezogen auf die Isocyanatkomponente, liegen.

Dem Reaktionsgemisch können ferner Zuschlags- und Füllstoffe zugesetzt werden, die eine weitere Verstärkung des Produktes bewirken. Beispielsweise für geeignete Füllstoffe sind Diatomeenerde, Aluminiumoxidhydrat, Magnesiumsilikat, Asbestpulver, Kreide, Asbestfasern und Glasfasern. Die Menge der zugesetzten Füllstoffe richtet sich in erster Linie nach der Viskosität des Gemisches. Sie liegt vorzugsweise im Bereich von 0,1 bis 30 Gewichtsprozent, bezogen auf das Gewicht der eingesetzten Wasserglaslösung.

Nach Wunsch können dem Reaktionsgemisch auch Pigmente oder Farbstoffe einverleibt werden.

Im Verfahren der Erfindung werden vorzugsweise zunächst zwei Komponenten A und B hergestellt. Die Komponente (A) besteht aus der Wasserglaslösung und enthält den Katalysator sowie die Verbindung, die den Katalysator dispergiert hält, das Polyol, die flammhindernden Zusätze, Füllstoffe und Farbstoffe. Die Komponente (B) besteht aus dem Polyisocyanat und enthält gegebenenfalls den Cokatalysator, sowie gegebenenfalls die flüchtige Substanz und den Stabilisator. Auch diese Komponente kann mit den genannten Bestandteilen verträgliche Zuschlags- und Füllstoffe sowie andere der genannten Zusätze enthalten. Nachdem auch das als Dispergiermittel für den Katalysator geeignete Antimontrioxid als Cokatalysator brauchbar ist, kann dieser auch in der Komponente (A) enthalten sein.

Sodann werden die Komponenten A und B sorgfältig vermischt. Die Startzeit der erhaltenen Gemische liegt im allgemeinen zwischen 5 und mehr als 100 Sekunden und ist nach Wunsch steuerbar. Gegebenenfalls können die Komponenten oder das Gemisch erwärmt oder gekühlt werden, um die Startzeit den Erfordernissen anzupassen. Das Gemisch wird in üblicher Weise, z.B. über Bohrlöcher oder Injektionslanzen, in die zu verfestigende Kohle oder Gebirgs-, Erd- oder Ziegelformationen eingebracht. Dazu kann Druck angewendet werden. Die Komponenten des Gemisches können auch in separaten Behältern von Mehrkammerpatronen untergebracht und nach deren Einbringen in die Formation durch Zerstörung der Patrone miteinander vermischt werden.

Die Umsetzung des Gemisches beginnt mit der Reaktion von NCO-Gruppen mit dem Wasser der Wasserglaslösung. Dabei entsteht Polyharnstoff und gasförmiges $CO_2$. Diese Umsetzung verläuft exotherm und die freiwerdende Wärme führt einerseits zur Verflüchtigung der flüchtigen Substanz und andererseits zum Beginn der Trimerisierung der verbliebenen NCO-Gruppen unter der Einwirkung des Katalysators. Das freigesetzte $CO_2$ seinerseits setzt sich mit dem $Me_2O$ des Wasserglases zu Alkalimetallcarbonat um. Dabei wird dem Wasserglas die $Me_2O$-Komponente entzogen und die verbleibende Kieselsäure-Komponente bildet im Verlauf der Umsetzung ein dreidimensionales anorganisches Gerüst, das sich mit dem gleichzeitig entstehenden organischen Polymerisat zu einem «interpermeated network» grosser Festigkeit verbindet und zu hervorragender Verfestigung der behandelten Kohle oder Gebirgsformation führt. Die in den von der entweichenden flüchtigen Substanz hinterlassenen «Kanälen» zurückbleibende Alkalicarbonatlösung trägt zur Erhöhung der Festigkeit bei.

Im Verfahren der Erfindung lässt sich das aus den

Komponenten A und B bestehende Zweikomponentensystem so einstellen, dass es sich auf den vorhandenen Verpresseinrichtungen ohne Änderungen der Anlagen einsetzen lässt. Nach dem Vermischen gehen die Komponenten zunächst vom flüssigen in einen plastischen Zustand über. Je nach Gebirgsverhältnissen und der herrschenden Temperatur hält der plastische Zustand länger oder kürzer an, bis das Gemisch schliesslich zu einem harten Material erstarrt.

Auch unter ungünstigen Bedingungen, wie z.B. in staubigem, feuchtem, sogar nassem Gestein entwickelt das Gemisch ein Maximum an Klebkraft für Kohle und Gestein oder Ziegel. Durch die besondere Katalyse laufen in dem Gemisch eine Reihe aufeinander abgestimmter Reaktionen ab, die es bewirken, dass die flüssigen Komponenten immer zu einem harten, klebenden Endprodukt reagieren.

Die Beispiele erläutern die Erfindung.

Die folgenden Beispiele dienen der Prüfung des Einflusses des Verhältnisses mMol Katalysator/Mol NCO sowie Mol NCO/Mol $SiO_2$ auf die Biegezugfestigkeit der Umsetzungsprodukte.

*Beispiel 1*

Es wird eine Reaktionskomponente A hergestellt, die folgende Stoffe in den angegebenen Mengen enthält:

| *Bestandteil:* | *Gew.-%* |
|---|---|
| Natronwasserglas 48/50 | 94,48 |
| $Sb_2O_3$ | 0,58 |
| 2,4,6-Tris-(dimethylaminomethyl)-phenol | 1,50 |
| Wasser | 3,44 |

Getrennt davon wird eine Reaktionskomponente B aus folgenden Bestandteilen hergestellt:

| *Bestandteil:* | *Gew.-%* |
|---|---|
| Polyphenylpolymethylenpolyisocyanat mit einem NCO-Anteil von etwa 31 Gew.-% | 93,00 |
| Trichlorfluormethan | 5,00 |
| Stabilisator | 2,00 |

Beim Vermischen der beiden Reaktionskomponenten in einem Gewichtsverhältnis A:B = 4:3 (11,36 mMol Katalysator pro Mol NCO-Gruppen) setzt nach etwa 1 Minute Gelierung ein. Nach 2 Minuten wird starker Temperaturanstieg beobachtet, und das Gemisch härtet zu einem Organomineralprodukt aus.

Zur Bestimmung der Biegezugfestigkeit des Produktes werden zwei Steine im Abstand von 5 mm an den Kopfseiten mit Tesaleinenband fixiert und das Gemisch der Reaktionskomponenten nach intensivem Rühren mit einem Holzstab kurz vor dem Gelieren blasenfrei in den Spalt zwischen den Steinen eingegossen.

Die Biegezugfestigkeit des derart geklebten Aufbaus wird

a) nach 2 Std. bei 20°C

b) nach 2 Std. bei 50°C (Aufbau im Trockenschrank)

c) nach 8 Tagen bei 20°C

gemessen (Biegezuggerät: Chemische Laboratorien für Tonindustrie, Prof. Dr. H. Seger und E. Cramer, Berlin). Die erhaltenen Werte sind in Tabelle I aufgeführt.

*Beispiele 2 bis 5 und*
*Vergleichsbeispiele 1 und 2*

Die Reaktionskomponenten A und B werden in den in Tabelle I angegebenen Verhältnissen vermischt. In dieser Tabelle sind ferner angegeben die mMol Katalysator pro Mol NCO sowie das Molverhältnis NCO/$SiO_2$, die sich bei den jeweiligen Mischungsverhältnissen einstellen. Die Biegezugfestigkeiten werden in der in Beispiel 1 angegebenen Weise geprüft. Die Ergebnisse sind in Tabelle I zusammengefasst und in Fig. 1 als Funktion des Verhältnisses mMol Katalysator/Mol NCO sowie in Fig. 2 die Funktion des Verhältnisses Mol NCO/Mol $SiO_2$ graphisch dargestellt.

TABELLE I

| Beispiel Nr. | Verhältnis A : B | mMol Katalysator pro Mol NCO | Mol NCO / Mol $SiO_2$ | Biegezugfestigkeit [N/mm²] 2 h 50°C | 2 h 20°C | 8 Tage 20°C |
|---|---|---|---|---|---|---|
| 1 | 1,3 | 11,36 | 1,00 | 3,3 | 0,89 | 8,10 |
| 2 | 1,2 | 10,38 | 1,10 | 1,59 | 0,83 | 7,05 |
| 3 | 1,0 | 8,65 | 1,32 | 1,23 | 0,78 | |
| 4 | 1,5 | 12,97 | 0,88 | 2,07 | 0,82 | |
| 5 | 1,6 | 14,4 | 0,82 | 0,81 | 0,80 | |
| Vergl. 1 | 0,6 | 5,77 | 2,20 | 0,76 | 0,88 | 3,8 |
| Vergl. 2 | 2,0 | 17,3 | 0,66 | 0,56 | 0,76 | |

*Versuchsbericht 1*

*Konsolidierung eines Kohleflözes in einem Bergwerk*

Der folgende Versuchsbericht arläutert die Anwendung des Verfahrens der Erfindung im Kohlebergbau.

1. *Versuchsbeschreibung*

1.1 *Ort:*

| | |
|---|---|
| Flözmächtigkeit: | 5,2 m max. |
| Verhieb: | ≦ 3 m/d |
| Störungen: | Bergepacken zur Kopfstrecke hin auslaufend. |

1.1.1 *Streb:*
Im Versuchsbereich befand sich durch untergesteckte Schlechten stark zum Ausböschen neigende Kohle mit den sich anschliessenden Ausbrüchen.

1.1.2 *Bandstrecke:*
Vorgesetzter Ort auf Bergepacken (durchschnittliche Dicke 1m). Saumsicherung durch Verfestigung der Unterbank.

1.1.3 *Kopfstrecke:*
Saumsicherung (Strecke mit Anhydrit hinterfüllt), vorgesetzter Stall mittlere Abbaueinwirkung.

1.2 *Zeit:*
Das Harzen wurde jeweils während der Nachtschicht durchgeführt.

1.3 *Anlage:*
Die vorhandene Streb-Harzanlage mit sämtlichen Förderleitungen wurde ohne Abänderung für den Versuch benutzt.

| | |
|---|---|
| Maschine: | Zweikomponenten-Harzpumpe |
| Leistung: | 15 l/min |
| Mischungsverhältnis: | 1:1 (volumetrisch) |
| Schlauchlänge: | ca. 350 m |
| Schlauch ∅: | 13 mm, weiss |
| Schlauch ∅: | 20 mm, schwarz |
| Harzentnahmestelle: | Zwischenhähne mit 13 mm Abgang im Streb |
| Verpresseinrichtung: | Konventionelle Lanze mit Bohrlochverschluss |

1.4 *Durchführung*
Die zur Verfügung stehenden 171 Kanister zu je 30 l Inhalt, wurden in 35 Bohrlöcher wie folgt eingesetzt:

| Anzahl der Bohrlöcher Bandst. | Streb | Kopfstr. | Anzahl der Kanister | durchschnittl. Anzahl der Kanister je Bohrloch |
|---|---|---|---|---|
| 3 | 4 | — | 42 | 6 |
| 6 | 6 | — | 52 | 4,3 |
| 4 | 6 | — | 65 | 6,5 |
| — | — | 6 | 12 | 2 |
| 13 | 16 | 6 | 171 | 4,9 |

2. *Ergebnisse:*
Bei der Umstellung der Streb-Harzungsanlage auf das neue Harzgemisch traten keine Schwierigkeiten auf. Das neue Harz ist hinsichtlich der Fliess- und Fördereigenschaften leicht zu verarbeiten. Das Reaktionsverhalten ist dem Anwendungsfall angepasst; es treten nur geringe Mengen an Flüssigharz nach Abschalten der Pumpe aus dem Gebirge aus. Je nach Klüftigkeit des Gebirges wurde festgestellt, dass das neue Harz im Gebirge lange Fliesswege zurücklegt und die Verteilung in den Spalten gleichmässig ist. Die Klebefähigkeit des Harzes an Kohle und Gestein wird als gut beurteilt.

Befahrungen vor jeder Nachtschicht zeigten, dass in allen Fällen nach fortgeschrittenem Abbau der Kohlenstoss gerade anstand. Ein Ausböschen wurde nicht mehr beobachtet. Ebenso traten keine neuen Ausbrüche auf. Vorangegangene Ausbruchzonen wurden konsolidiert. Bemerkenswert ist, dass aufgrund der steinigen Beschaffenheit des neuen Harzes verfestigte Brocken leicht mit dem Abbauhammer zerkleinert werden konnten. Beim Kohlen von Hand z.B. im Stall stellt dies eine Arbeitserleichterung dar. Weiterhin konnte die Lanze jeweils nach dem Verpressvorgang für Wiederverwertung aus dem Gebirge geborgen werden.

*Versuchsbericht 2*

*Konsolidierung einer Beton-Tunnelauskleidung*

In einem, einen vertikalen Betonschacht aufweisenden Tunnel mit einem glockenförmigen unteren Ende in einer Tiefe von 780 m floss Wasser mit einem pH-Wert von etwa 4 in die Hohlräume hinter der Betonabschirmung in einer Menge von etwa 20 l/min und verursachte schwere chemische Schädigung des Betons.

Zur Abdichtung der Hohlräume und zum Schutz der Gesteinsformation vor dem fliessenden Wasser wurde in den Beton eine Anzahl Bohrlöcher vorgetrieben. Jedes Bohrloch wurde mit einem Verschluss versehen, durch den das Verfestigungsmaterial der Erfindung in die in der Nähe des Bohrlochs befindlichen Hohlräume gepresst werden konnte, am Austritt durch das Bohrloch aber gehindert wurde. Das Einpressen erfolgte mit einer Hochdruckpumpe mit einer Abgabeleistung von 6-40 l/min gegen Atmosphärendruck. Die Injektionseinrichtung gab die Komponenten A und B durch getrennte Schläuche in die Bohrlöcher ab, wo sie durch einen innenliegenden statischen Mischer unmittelbar vor dem Verschluss vermischt wurden. Die Komponenten wurden in einem Volumenverhältnis von 1:1 eingepresst. Die Bohrlöcher waren netzartig in einem Abstand von 5 bis 10 m angeordnet.

Durch das Einpressen des reaktiven Gemisches der Erfindung durch den Mischer und die Bohrlöcher in die länglichen Spalten und Hohlräume, die damit in Verbindung standen, bis entweder die Pumpeinheit einen Betriebsdruck über 130 bar erreichte oder das Material aus einem benachbarten Bohrloch austrat, wurde Konsolidierung erreicht.

Die Arbeit wurde in ähnlicher Weise fortgesetzt, bis der gesamte Hohlraum hinter der Betonabschirmung mit dem Material der Erfindung gefüllt war. Die Arbeit war nach 2 Tagen beendet. Der Wasserfluss war gestoppt und das Material, das nach und nach aufhörte, durch die Betonabschirmung zurückzufliessenden, beendete schliesslich jedes Ausfliessen.

**Patentansprüche**

1. Verfahren zum Verfestigen und Abdichten von Kohle und/oder Gebirgs-, Erd- oder Ziegelformationen durch Umsetzung von Polyisocyanaten und wässrigen Alkalisilikatlösungen in der zu verfestigenden Kohle oder Gebirgs-, Erd- oder Ziegelformation, dadurch gekennzeichnet, dass man die Umsetzung in Gegenwart eines die Trimerisierung des Polyisocyanates aktivierenden Katalysators durchführt und den Katalysator in einer Menge von 6,0 bis 14,5 mMol pro Mol NCO-Gruppen im Reaktionsgemisch einsetzt, so dass bei der Umsetzung ineinander verwobene Netzwerke aus anorganischem und organischem Polymerisat entstehen.

2. Verfahren nach Anspruch 1, dadurch gekennzeichnet, dass man den Katalysator in einer Menge von 8,5 bis 13,8, insbesondere von 10,2 bis 13,3 mMol pro Mol NCO-Gruppen einsetzt.

3. Verfahren nach Anspruch 1 und 2, dadurch gekennzeichnet, dass man ein Polyisocyanat mit einem Gehalt an NCO-Gruppen von 10 bis 55 Gewichtsprozent, bezogen auf die Masse des Polyisocyanats, einsetzt.

4. Verfahren nach Anspruch 3, dadurch gekennzeichnet, dass man 4,4'-Diphenylmethandiisocyanat, ein Phosgenierungsprodukt von Anilin-Formaldehyd-Kondensaten (rohes MDI) oder ein Präpolymerisat davon als Polyisocyanat einsetzt.

5. Verfahren nach Anspruch 4, dadurch gekennzeichnet, dass man als Präpolymerisat ein Umsetzungsprodukt von rohem MDI mit glykolgestartetem Polysiloxan mit einer OH-Zahl von 40 bis 200 einsetzt.

6. Verfahren nach Anspruch 1, dadurch gekennzeichnet, dass man eine wässrige Natriumsilikatlösung mit einem Feststoffgehalt von 40 bis 60 Gewichtsprozent einsetzt.

7. Verfahren nach Anspruch 1 oder 6, dadurch gekennzeichnet, dass man eine wässrige Alkalisilikatlösung mit einem Molverhältnis $SiO_2$ zu $Me_2O$ von 2,09 bis 3,44, vorzugsweise von 2,48 bis 3,17 einsetzt.

8. Verfahren nach Anspruch 1 bis 3, 6 und 7, dadurch gekennzeichnet, dass man das Polyisocyanat und die Alkalisilikatlösung in einem Molverhältnis $NCO/SiO_2$ von 0,8 bis 1,4, vorzugsweise von 0,85 bis 1,15, einsetzt.

9. Verfahren nach Anspruch 1 bis 8, dadurch gekennzeichnet, dass man eine flüchtige Substanz in einer Menge von höchstens 3,5 Gewichtsprozent, bezogen auf die Gesamtmasse des Reaktionsgemisches, einsetzt.

10. Verfahren nach Anspruch 1 bis 9, dadurch gekennzeichnet, dass man dem den Katalysator enthaltenden Gemisch Antimontrioxid zusetzt.

11. Verfahren nach Anspruch 1 bis 10, dadurch gekennzeichnet, dass man zusätzlich mindestens einen die Trimerisierungsreaktion fördernden Cokatalysator einsetzt.

12. Verfahren nach Anspruch 11, dadurch gekennzeichnet, dass man als Cokatalysator Trialkylphosphane, Alkalimetallsalze von Carbonsäuren oder Übergangsmetallverbindungen wie $Sb_2O_3$, $ZrOCl_2$, $SbCl_5$, CuCl und $FeCl_3$ einsetzt.

13. Verfahren zum Verfestigen und Abdichten von Kohle und/oder Gebirgs-, Erd- oder Ziegelformationen durch Umsetzung von Polyisocyanaten und wässrigen Alkalisilikatlösungen in der zu verfestigenden Kohle oder Gebirgs-, Erd- oder Ziegelformation, dadurch gekennzeichnet, dass man die Umsetzung in Gegenwart eines die Trimerisierung des Polyisocyanates aktivierenden Katalysators durchführt und (a) den Katalysator in einer Menge von 6,0 bis 14,5 mMol pro Mol NCO-Gruppen im Reaktionsgemisch sowie (b) die Alkalisilikatlösung im Hinblick auf ihren $SiO_2$-Anteil in einem Molverhältnis $NCO/SiO_2$ von 0,8 bis 1,4 einsetzt, so dass bei der Umsetzung ineinander verwobene Netzwerke aus anorganischem und organischem Polymerisat entstehen.

**Claims**

1. A process for consolidating and sealing coal and/or rock and soil formations in mining and tunnelling by reacting polyisocyanates and aqueous alkali silicate solutions in the coal or rock and soil formation to be consolidated, characterized in that the reaction is performed in the presence of a catalyst prompting trimerization of the polyisocyanate and in that the catalyst is used in an amount of 6.0 to 14.5 mmole per mole of NCO groups in the reaction mixture so that interwoven networks of inorganic and organic polymers are formed during the reaction.

2. The process according to claim 1, characterized in that the catalyst is used in an amount of 8.5 to 13.8, and in particular 10.2 to 13.3 mmole per mole of NCO groups.

3. The process according to claims 1 and 2, characterized in that the polyisocyanate used contains 10 to 55 weight percent of NCO groups, based on the mass of polyisocyanate.

4. The process according to claim 3, characterized in that 4,4'-diphenylmethane diisocyanate, a phosgenation product of aniline formadehyde condensates (crude MDI) or a prepolymer thereof is used as polyisocyanate.

5. The process according to claim 4, characterized in that a reaction product of the phosgenation product of crude MDI and glycol-initiated polysiloxane having an OH number of 40 to 200 is used as prepolymer.

6. The process according to claim 1, characterized in that an aqueous sodium silicate solution with a solids content of 40 to 60 weight percent is used.

7. The process according to claim 1 or 6, characterized in that an aqueous alkali silicate solution wherein the molar ratio of $SiO_2$ to $Me_2O$ is 2.09 to 3.44, preferably 2.48 to 3.17 is used.

8. The process according to claims 1 to 3, 6 and 7, characterized in that the polyisocyanate and the alkali silicate solution are used in an $NCO/SiO_2$ molar ratio of 0.8 to 1.4, preferably 0.85 to 1.15.

9. The process according to claim 1 to 8, characterized in that a volatile substance is used in an amount of at most 3.5 weight percent, based on the total mass of the reaction mixture.

10. The process according to claim 1 to 9, characterized in that antimony trioxide is added to the mixture containing the catalyst.

11. The process according to claim 1 to 10, characterized in that at least one cocatalyst promoting the trimerization reaction is used.

12. The process acording to claim 11, characterized in that trialkyl phosphane, alkali metal salts of carboxylic acids or transition metal compounds such as $Sb_2O_3$, $ZrOCl_2$, $SbCl_5$, CuCl and $FeCl_3$ are used as cocatalysts.

13. A process for consolidating and sealing coal and/or rock and soil formations in mining and tunnelling by reacting polyisocyanates and aqueous alkali silicate solutions in the coal or rock and soil formation to be consolidated, characterized in that the reaction is carried out in the presence of a catalyst prompting the trimerization of the polyisocyanate and in that (a) the catalyst is used in an amount of 6.0 to 14.5 mmole per mole of NCO groups in the reaction mixture and (b) considering its $SiO_2$ content, the alkali silicate solution is used in an $NCO/SiO_2$ molar ratio of 0.8 to 1.4 so that interwoven networks of inorganic and organic polymers are formed during the reaction.

## Revendications

1. Procédé de consolidation et d'étanchement de houille et/ou de formations de roches, de terre ou de briques par réaction de polyisocyanates et de solutions aqueuses de silicate de métal alcalin dans la houille ou la formation de roches, de terre ou de briques à consolider, caractérisé en ce qu'on effectue la réaction en présence d'un catalyseur qui active la trimérisation du polyisocyanate et en ce qu'on met en œuvre le catalyseur en une quantité de 6,0 à 14,5 mmoles par mole de groupes NCO dans le mélange réactionnel, de façon à obtenir au cours de la réaction des structures réticulaires entrelacées à base du produit de polymérisation inorganique et organique.

2. Procédé suivant la revendication 1, caratérisé en ce qu'on met en œuvre le catalyseur en une quantité de 8,5 à 13,8, en particulier de 10,2 à 13,3, mmoles par mole de groupes NCO.

3. Procédé suivant l'une des revendications 1 et 2, caractérisé en ce qu'on met en œuvre un polyisocyanate ayant une teneur en groupes NCO de 10 à 55% en poids, par rapport à la masse du polyisocyanate.

4. Procédé suivant la revendication 3, caractérisé en ce qu'on met en œuvre, comme polyisocyanate, du diisocyanate de 4,4'-diphénylméthane, un produit de phosgénation de produit de condensation d'aniline-formaldéhyde (MDI brut) ou un prépolymère de ce dernier.

5. Procédé suivant la revendication 4, caractérisé en ce que, comme prépolymère, on met en œuvre un produit de la réaction de MDI brut avec du polysiloxane obtenu au départ de glycol et présentant un indice de OH de 40 à 200.

6. Procédé suivant la revendication 1, caractérisé en ce qu'on met en œuvre une solution aqueuse de silicate de sodium ayant une teneur en matière solide de 40 à 60% en poids.

7. Procédé suivant l'une des revendications 1 et 6, caractérisé en ce qu'on met en œuvre une solution aqueuse de silicate de métal alcalin présentant un rapport molaire entre $SiO_2$ et $Me_2O$ de 2,09 à 3,44, de préférence de 2,48 à 3,17.

8. Procédé suivant l'une des revendications 1 à 3, 6 et 7, caractérisé en ce qu'on met en œuvre le polyisocyanate et la solution de silicate de métal alcalin en un rapport molaire $NCO/SiO_2$ de 0,8 à 1,4 de préférence de 0,85 à 1,15.

9. Procédé suivant l'une des revendications 1 à 6, caractérisé en ce qu'on met en œuvre une substance volatile en une quantité maximum de 3,5% en poids, par rapport à la masse totale du mélange réactionnel.

10. Procédé suivant l'une des revendications 1 à 9, caractérisé en ce qu'on ajoute du trioxyde d'antimoine au mélange contenant le catalyseur.

11. Procédé suivant l'une des revendications 1 à 10, caractérisé en ce qu'on met en œuvre en supplément au moins un co-catalyseur favorisant la réaction de trimérisation.

12. Procédé suivant la revendication 11, caractérisé en ce qu'on met en œuvre, comme co-catalyseur, des trialkylphosphanes, des sels de métal alcalin d'acides carboxyliques ou des composés de métal de transition, tels que $Sb_2O_3$, $ZrOCl_2$, $SbCl_5$, CuCl et $FeCl_3$.

13. Procédé de consolidation et d'étanchement de houille et/ou de formations de roches, de terre ou de briques, par réaction de polyisocyanates et de solutions aqueuses de silicate de métal alcalin dans la houille ou la formation de roches, de terre ou de briques à consolider, caractérisé en ce qu'on effectue la réaction en présence d'un catalyseur qui active la trimérisation du polyisocyanate et en ce que on met en œuvre (a) le catalyseur en une quantité de 6,0 à 14,5 mmoles par mole de groupes NCO dans le mélange réactionnel, ainsi que (b) la solution de silicate de métal alcalin, en ce qui concerne sa fraction en $SiO_2$, en un rapport molaire $NCO/SiO_2$ de 0,8 à 1,4, de façon à obtenir au cours de la réaction des structures réticulaires entrelacées à base du produit de polymérisation inorganique et organique.

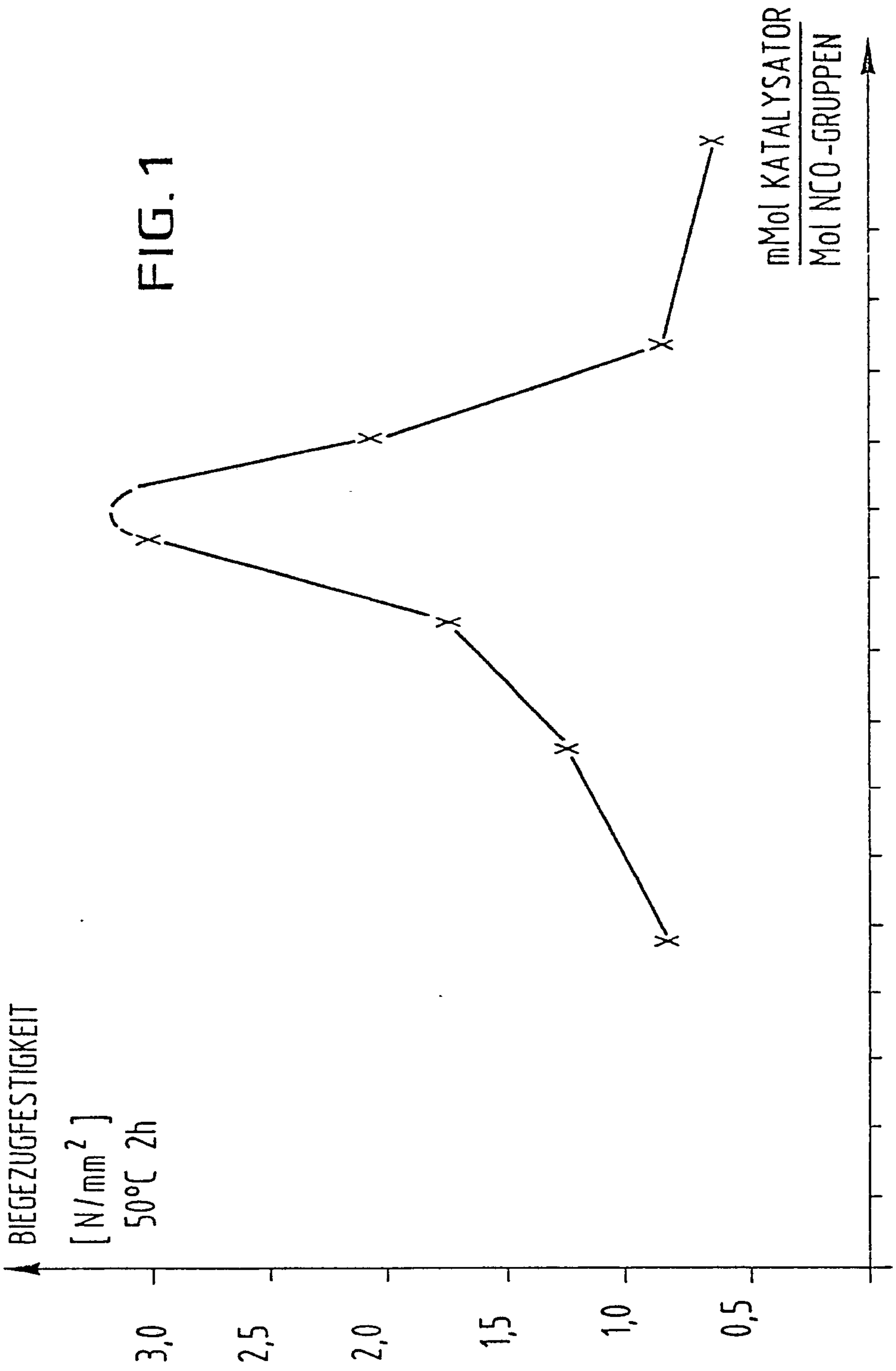
BIEGEZUGFESTIGKEIT
[ N/mm$^2$ ]
50°C 2h
3,0
2,5
2,0
1,5
1,0
0,5
5
6
7
8
9
10
11
12
13
14
15
16
mMol KATALYSATOR / Mol NCO-GRUPPEN

FIG. 1

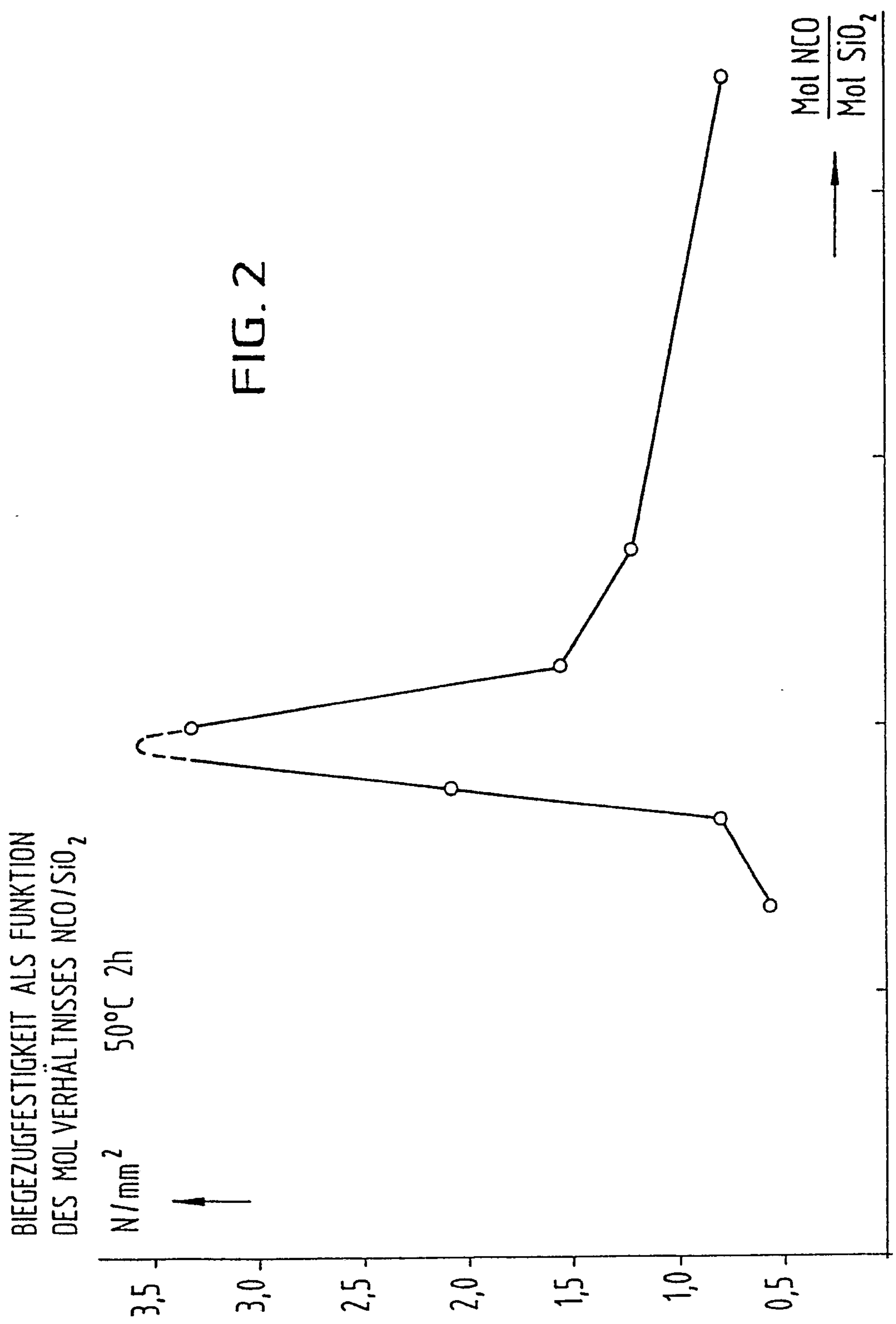
BIEGEZUGFESTIGKEIT ALS FUNKTION
DES MOLVERHÄLTNISSES NCO/SiO2
50°C 2h
N/mm2
3,5
3,0
2,5
2,0
1,5
1,0
0,5
0,5
1,0
1,5
2,0
Mol NCO
Mol SiO2

FIG. 2